# EUROPÄISCHE PATENTSCHRIFT

(11) **EP 1 234 233 B1**
(45) Veröffentlichungstag und Bekanntmachung des Hinweises auf die Patenterteilung: **18.06.2003**
(21) Anmeldenummer: 00940155.5
(22) Anmeldetag: 27.04.2000
(51) Int. Cl.: G06F 9/455

(54) **VERFAHREN ZUR IMPLEMENTIERUNG EINER ALGORITHMISCHEN FUNKTIONSEINHEIT**
METHOD FOR IMPLEMENTING AN ALGORITHMIC FUNCTIONAL UNIT
PROCEDE D'IMPLEMENTATION D'UNE UNITE FONCTIONNELLE ALGORITHMIQUE

(30) Priorität: 29.11.1999 DE 19957294
(43) Veröffentlichungstag der Anmeldung: 28.08.2002
(73) Patentinhaber: SIEMENS AKTIENGESELLSCHAFT, 80333 München (DE)
(72) Erfinder: FINGSCHEIDT, Tim, D-81543 München (DE)
(86) Internationale Anmeldenummer: DE0001331
(87) Internationale Veröffentlichungsnummer: WO01040936

(56) Entgegenhaltungen:
- MASAHIRO SUGUIMOTO ET AL: "DSP SIMULATION SYSTEM AND ITS APPLICATION TO 32K BPS ADPCM CODEC USING GENERAL PURPOSE DSP WITH FLOATING POINT ARITHMETIC" INTERNATIONAL JOURNAL OF MINI AND MICROCOMPUTERS,US,ACTA PRESS. ANAHEIM, CALIFORNIA, Bd. 10, Nr. 2, 1988, Seiten 51-55, XP000110628 ISSN: 0702-0481
- JUHANI VEHVILAINEN ET AL: "A PROCESSOR CORE FOR 32 KBIT/S G.726 ADPCM CODES" , INTERNATIONAL SYMPOSIUM ON CIRCUITS AND SYSTEMS (ISCAS),US,NEW YORK, IEEE, PAGE(S) 1932-1935 XP000559074 ISBN: 0-7803-2571-0 Zusammenfassung
- OVASKA S J: "MACRO-BASED SIMULATED FLOATINGPOINT PROGRAMMING ENVIRONMENT FOR INSTRUMENTATION APPLICATIONS" MEASUREMENT,GB,INSTITUTE OF MEASUREMENT AND CONTROL. LONDON, Bd. 11, Nr. 1, 1. März 1993 (1993-03-01), Seiten 39-44, XP000368527 ISSN: 0263-2241

## Beschreibung

In Systemen zur Speicherung oder Übertragung von Daten oder digitalen Signalen existieren oftmals Gruppen von algorithmischen Funktionseinheiten, die mit Größen arbeiten, die den Zustand aller Funktionseinheiten einer Gruppe in einem solchen System beeinflussen. Meist sind einzelne Mitglieder einer Gruppe von solchen algorithmischen Funktionselementen Bestandteil unterschiedlicher Subsysteme eines Gesamtsystems zur Übertragung von Nachrichten. Ein wichtiges Beispiel für eine derartige Situation ist ein Mobilfunknetz (Gesamtsystem), über welches Sprachsignale oder multimediale Signale zwischen unterschiedlichen Endgeräten oder zwischen Content-Servern und Endgeräten übertragen werden. Die Endgeräte können sehr unterschiedliche Geräte sein, unter denen z.B. mobile Telefone oder Mobile Computer (stationäre Personal Computer, Notebooks, Personal Digital Assistants, etc.) mit Funkmodulen vertreten sein können.

Zur Übertragung von Signalen zwischen diesen Netzelementen werden diese Signale im sendenden Subsystem encodiert und nach der Übertragung im empfangenden Subsystem decodiert. Ganz ähnlich läuft der Vorgang ab, wenn Daten oder Signale nicht übertragen sondern gespeichert werden sollen. In diesem Fall tritt die Speicherung an die Stelle der Übertragung, das Schreiben an die Stelle des Sendens und das Lesen an die Stelle des Empfangens. Zwischen der Speicherung und der Übertragung von Signalen oder Daten gibt es also unter diesen Aspekten keine prinzipiellen Unterschiede. Wenn daher im folgenden nur von einer dieser beiden Anwendungen die Rede ist, soll der fachmännische Leser immer auch an die mögliche andere Anwendung denken.

Encoder und Decoder beinhalten häufig eine gleichartige Unterfunktionseinheit oder arbeiten jedenfalls mit Größen, die den Zustand sowohl des Encoders als auch den des Decoders beeinflussen. Für eine bestimmungsgemäße Funktion von Encoder und Decoder ist es wünschenswert, daß ihnen gemeinsame Zustandsgrößen in Encoder und Decoder gleiche Werte annehmen; andernfalls könnte es - zumindest für einige Eingangssignalverläufe - vorkommen, daß das decodierte Signal von dem encodierten Signal in unkontrollierbarer Weise abweicht. Abgesehen davon, daß solche Abweichungen auch von Übertragungsfehlern herrühren können, deren Auswirkung hier nicht betrachtet werden soll, lassen sich solche Abweichungen vermeiden, wenn sichergestellt ist, daß die gemeinsamen Zustandsgrößen von Encoder und Decoder übereinstimmen.

Der Erfindung liegt daher die Aufgabe zugrunde, eine technische Lehre anzugeben, mit der es möglich ist, diese Anforderungen unter praktischen technischen Randbedingungen zu erfüllen. Diese Aufgabe wird durch ein Verfahren gemäß dem Anspruch 1 gelöst.

Bei diesem Verfahren werden die individuellen Eigenschaften der Hardware-Architekturen der Prozessoren der einzelnen Subsysteme, in denen solche algorithmischen Funktionseinheiten implementiert sind, in optimaler Weise genutzt. Dies geschieht dadurch, daß nur diejenigen Funktionen, die sich auf die Berechnung der gemeinsamen Zustandsgrößen auswirken, in einheitlicher Weise implementiert werden, wogegen alle übrigen Funktionen in einer Weise implementiert werden, die von den individuellen Eigenschaften der Hardware-Architekturen der Prozessoren der Subsysteme optimal unterstützt werden.

Im folgenden wird die Erfindung anhand eines bevorzugten Ausführungsbeispiels und mit Hilfe von Figuren näher beschrieben.

Dabei zeigt
Figur 1 eine schematische Darstellung der grundsätzlichen Eigenschaften eines erfindungsgemäßen Systems,
Figur 2 eine schematische Darstellung eines Encoders und
Figur 3 eine schematische Darstellung eines Decoders.

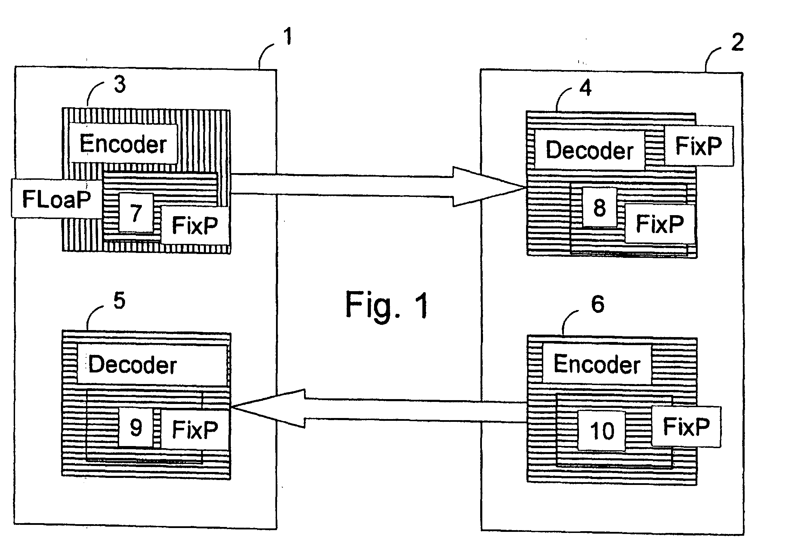

Wie in Figur 1 dargestellt, umfassen zwei Subsysteme eines typischen Kommunikationssystems die miteinander in einer bidirektionalen Verbindung stehen, über die z.B. Sprachsignale ausgetauscht werden sollen, jeweils einen Encoder und einen Decoder. Falls das erste Subsystem (1) z.B. ein mobiler oder stationärer Computer (Notebook oder PC) mit einer für diese Computer typischen Prozessoreinheit, die Gleitkommaarithmetik besonders unterstützt, ist, und falls das zweite Subsystem (2) z.B. ein Mobiltelefon ist, dessen Signalprozessor nur eine Festkommaarithmetik unterstützt, werden Encoder (6) und Decoder (4) auf dem Mobiltelefon in der Festkommaarithmetik implementiert. Auch auf dem Notebook wird der Decoder (5) in der Festkommaarithmetik implementiert. Hierdurch wird sichergestellt, das die Kommunikation zwischen dem Encoder (6) des Mobiltelefons und dem Decoder (5) des Notebooks reibungslos funktioniert, denn beide sind in der gleichen Arithmetik implementiert, und hierdurch wird sichergestellt, daß die Zustandsgrößen beider Funktionseinheiten in gleicher Weise, d.h. insbesondere mit der gleichen Genauigkeit ermittelt werden. Beide Funktionseinheiten verfügen also zu jedem Zeitpunkt über einen identischen Satz von Zustandsgroßen, zumindest dann, wenn Übertragungsfehler nicht auftreten oder z.B. durch eine fehlerkorrekturfähige Kanalcodierung beseitigt werden.

Nur diese Übereinstimmung in den Zustandsgrößen zwischen Encoder (6) und Decoder (5) kann wirklich sicherstellen, daß das dekodierte Signal - abgesehen von irrelevanten Differenzen, die z.B. in nicht hörbaren Spektralbereichen liegen - mit dem encodierten Quell-Signal übereinstimmt. Um diese gewünschte Übereinstimmung auch für die umgekehrte Übertragungsstrecke zwischen dem Encoder (3) des Notebooks und dem Decoder (4) des Mobiltelefons sicherzustellen, könnte man auf den Gedanken kommen, hier ebenfalls beide Funktionseinheiten (3 und 4) in derselben Arithmetik zu implementieren. Diese vermeintliche Lösung stößt aber in der Praxis auf ernsthafte Schwierigkeiten:

Die Signalprozessoren von Mobiltelefonen und anderen Subsystemen von Kommunikationssystemen verfügen nicht über die gleiche Hardware-Architektur wie die CPUs von Computern, die ja auch andere Aufgaben zu bewältigen haben als z.B. Mobiltelefone. Häufig verfügen Mobiltelefone über Prozessoren die nur Festkommaarithmetik unterstützen, wogegen die Prozessoren von Computern üblicherweise die Gleitkommaarithmetik besonders unterstützen. Eine Implementierung von Encoder und Decoder in Gleitkommaarithmetik scheidet daher aus, weil das Mobiltelefon nur die Festkommaarithmetik beherrscht. Eine Implementierung von Encoder und Decoder in Festkommaarithmetik kommt ebenfalls nicht in Frage, weil der Gleitkommaprozessor des Notebooks die Festkommaarithmetik des Prozessors des Mobiltelefons nur unter großem Aufwand emulieren kann.

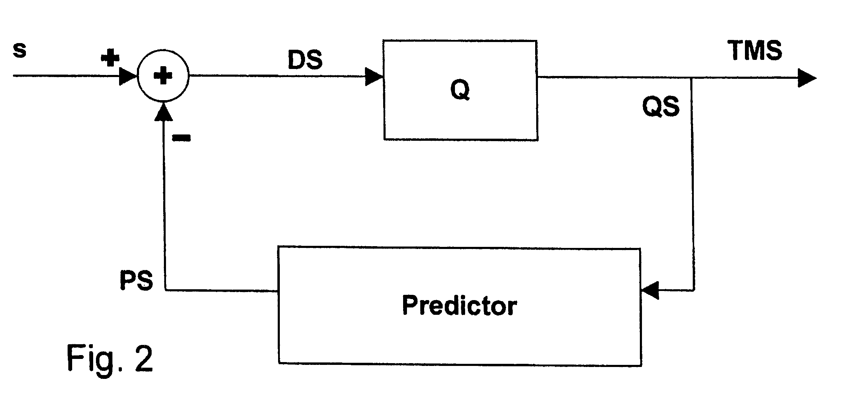

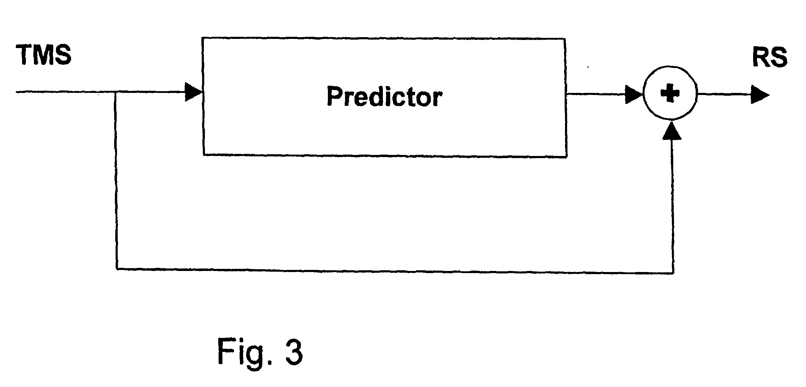

Eine vermeintliche Lösung dieses Dilemmas könnte der Fachmann in der Realisierung des Encoders (3) in der Gleitkommaarithmetik sehen. Dies hätte aber zur Folge, daß die Zustandsgrößen im Encoder mit anderer Genauigkeit als im Decoder ermittelt würden. Beide Systeme würden nicht mehr bestimmungsgemäß zusammenarbeiten. Das Problem läßt sich konkret an einem Beispiel verdeutlichen, daß durch die Figuren 2 und 3 illustriert wird. Figur 2 zeigt einen Encoder, der einen Prädiktor beinhaltet. Figur 3 zeigt den entsprechenden Decoder, der denselben Prädiktor beinhaltet. Beide Funktionseinheiten arbeiten nur dann sicher bestimmungsgemäß zusammen, wenn die Funktionen der Unterfunktionseinheit "Predictor" in beiden Subsystemen in gleicher Weise ausgeführt werden.

Die Erfindung sieht in dieser Situation vor, den Encoder auf dem Notebook in Gleitkommaarithmetik zu implementieren, mit der Ausnahme des Prädiktors, der in der Festkommaarithmetik implementiert wird, in der auch der Decoder implementiert wird (Figur 1). Dieser Idee liegt die durch praktische Versuche erworbene Erfahrung zugrunde, daß eine Emulation der Festkommaarithmetik auf dem Gleitkommaprozessor des Datenverarbeitungssystems, mit vertretbarem Aufwand möglich ist, sofern sie auf den Prädiktor beschränkt bleibt und die anderen Funktionen des Encoders, die dieser nicht mit dem Decoder gemeinsam hat, ausschließt.

Dieser Kompromiß kann normalerweise mit einem geringen Mehraufwand an Rechenkapazität realisiert werden. Die erfinderische Lösung ist vom Fachmann im Anschluß an die vorliegende Beschreibung ohne Schwierigkeiten auf andere Kommunikationssysteme und Typen algorithmischer Funktionseinheiten übertragbar. Voraussetzung ist lediglich, daß eine Gruppe algorithmischer Funktionseinheiten existiert, deren Mitglieder in verschiedenen Subsystemen mit unterschiedlichen Prozessorarchitekturen implementiert sind. Wenn diese Funktionseinheiten eine gemeinsame Unterfunktionseinheit besitzen oder - anders formuliert - einen gemeinsamen Satz von Zustandsgrößen besitzen, dann werden die zur Berechnung dieser gemeinsamen Zustandsgrößen benötigten Funktionen in der gleichen Weise implementiert, wogegen die übrigen Funktionen der algorithmischen Funktionseinheiten auf verschiedenen Subsystemen in unterschiedlicher Weise implementiert werden können. Aus Gründen der Einfachheit soll in der vorliegenden Beschreibung nur auf die Einzelheiten einer Realisierung der Erfindung an einem Beispiel eingegangen werden, dessen Gegenstand die Sprach-Kommunikation eines Notebooks mit einem Mobiltelefon ist.

Figur 1 zeigt eine stark vereinfache schematische Darstellung einer Duplex-Sprachübertragung zwischen einem Personal Computer (Notebook) und einem Mobiltelefon. In dem PC befindet sich ein Gleitkommaprozessor (1), in dem Mobiltelefon ein Festkommaprozessor (2), der z.B. ein digitaler Signalprozessor (DSP) sein kann. Sprachencoder (6) und Sprachdecoder (4) auf dem DSP (Mobiltelefon) sind standardisierte Festkommaalgorithmen. Um eine optimale Interoperabilität des Encoders (6) auf dem Mobiltelefon (2) mit dem Decoder (5) auf dem Notebook (1) sicherzustellen, ist der Decoder (5) auf dem PC (1) als Festkommaalgorithmus implementiert. Eine Implementierung eines Festkommaalgorithmus auf einem Gleitkommaprozessor erfordert zwar eine höhere Rechenleistung, fällt jedoch im Falle des Decoders nicht so sehr ins Gewicht, da der Decoder im allgemeinen nur einen Bruchteil der Rechenleistung des Encoders in Anspruch nimmt. Eine Implementierung des gesamten Encoders auf dem Notebook als Gleitkommaalgorithmus kommt jedoch nicht in Betracht, da der Encoderalgorithmus normalerweise sehr rechenintensive Funktionen beinhaltet, die beim Decoder nicht auftreten. Welche Funktionen das sind, hängt vom verwendeten Kodierverfahren ab. Beispiele hierfür sind eine - möglicherweise adaptive - Quantisierung eines Differenzsignals oder eine Codebuchsuche.

Deshalb werden diejenigen Funktionen des Encoders (z.B. der Prädiktor), die Zustandsgrößen berechnen, die auch im Decoder auftreten, gemäß der vorliegenden Erfindung als Festkommaalgorithmus implementiert. Dies ist mit vertretbarem Aufwand auch auf einem Gleitkommaprozessor möglich. Alle anderen Funktionen des Encoders werden als Gleitkommaalgorithmen auf dem PC-Prozessor implementiert, da dieser Gleitkommaalgorithmen besonders effizient ausführen kann.

Im allgemeinen kommen einige Decodergrößen, die den Zustand des Decoders beeinflussen, auch im Encoder vor. Bei gleicher Rechengenauigkeit und im Falle einer fehlerfreien Übertragung nehmen diese Größen im Encoder (3) und im Decoder (4) bzw. im Encoder (6) und im Decoder (5) gleiche Werte an. Die Übereinstimmung der Zustände von Encoder und Decoder ist eine wesentliche Voraussetzung für eine qualitativ hochwertige Sprachübertragung. Die den Zustand des Decoders beeinflussenden Größen werden in den Untermodulen (8) bzw. (9) aktualisiert (d.h. berechnet). Einige dieser Größen existieren üblicherweise auch im Encoder und werden in den Untermodulen (7) bzw. (10) aktualisiert. Im allgemeinen müssen nicht alle Zustandsgrößen des Decoders auch den Zustand des Encoders beeinflussen, und auch umgekehrt gilt, daß auch der Zustand des Encoders häufig von Größen beeinflußt wird, die den Decoder nicht beeinflussen.

Die Erfindung sieht nun vor, alle Größen in Block 7 der Figur 1, oder eine Auswahl davon, in derselben Rechengenauigkeit zu aktualisieren, wie im Decoder (4) in Block (8). In der Figur 1 stellt also der Block 7 ein Festkommamodul innerhalb des Gleitkommaalgorithmus (3) dar, in dem der gesamte Encoder (3) implementiert ist. Mit einem geringen zusätzlichen Rechenaufwand wird dadurch sichergestellt, daß wichtige, den Decoder beeinflussende Größen im Encoder exakt (unter der Annahme einer fehlerfreien Übertragung) bekannt sind und somit die Werte der Zustandsgrößen, die Encoder und Decoder gemeinsam haben, übereinstimmen - man könnte auch sagen: synchronisiert sind.

Dies verbessert die Interoperabilität von Gleit- und Festkommaalgorithmen erheblich im Sinne einer stabileren Ubertragungsqualität. Treten Übertragungsfehler auf, dann ist durch die Erfindung sichergestellt, daß die Übertragung zwischen Encoder (3) und Decoder (4) genauso robust gegen solche Übertragungsfehler ist, wie die Übertragung zwischen Encoder (6) und Decoder (5). Durch die Erfindung wird auch die Interoperabilität bei der Sprachübertragung zwischen zwei PCs verbessert, da auch in den PCs die Decoder in jedem Fall in Festkommaarithmetik implementiert sind.

## Patentansprüche

1. Verfahren zur Implementierung einer ersten algorithmischen Funktionseinheit (3) in einem ersten Subsystem (1) eines Gesamtsystems (1 und 2) zur Speicherung oder zur Übertragung von Daten oder digitalen Signalen (s) unter Berücksichtigung der Implementierung einer zweiten algorithmischen Funktionseinheit (4) in einem zweiten Subsystem (2) des Gesamtsystems, wobei beide algorithmischen Funktionseinheiten (3 bzw. 4) eine gemeinsame algorithmische Unterfunktionseinheit (7 bzw. 8) aufweisen,
**dadurch gekennzeichnet, daß**
a) die Prozessoren des ersten bzw. zweiten Subsystems eine erste bzw. zweite Arithmetik durch die Hardware-Architektur dieser Prozessoren besonders unterstützen,
b) die algorithmischen Funktionseinheiten jeweils in der Arithmetik desjenigen Prozessors implementiert werden, in dessen Subsystem sie ausgeführt werden, wobei
c) die der gemeinsamen Unterfunktionseinheit entsprechenden Funktionen in beiden Subsystemen in derselben Arithmetik implementiert werden, wobei ein Subsystem zu diesem Zweck die Arithmetik des anderen Subsystems emuliert.

2. Verfahren nach Anspruch 1, bei dem die erste algorithmische Funktionseinheit ein Encoder und die zweite algorithmische Funktionseinheit ein Decoder ist.

3. Verfahren nach einem der vorhergehenden Ansprüche, bei dem die erste Arithmetik eine Gleitkommaarithmetik (FloaP) und die zweite Arithmetik eine Festkommaarithmetik (FixP) ist.

4. Verfahren nach einem der vorhergehenden Ansprüche, bei dem das erste Subsystem ein Datenverarbeitungssystem ist und bei dem das zweite Subsystem ein Kommunikationsendgerät ist.

## Claims

1. Method for implementing a first algorithmic functional unit (3) in a first subsystem (1) of a total system (1 and 2) for the purpose of storing or transmitting data or digital signals (s), taking account of the implementation of a second algorithmic functional unit (4) in a second subsystem (2) of the total system, both of the algorithmic functional units (3 and 4) having a common algorithmic subfunctional unit (7 and 8, respectively),
**characterized in that**
a) the processors of the first and second subsystems respectively particularly support a first and second arithmetic by means of the hardware architecture of these processors,
b) the algorithmic functional units are implemented in each case in the arithmetic of that processor in whose subsystem they are executed,
c) the functions corresponding to the common subfunctional unit being implemented in both subsystems in the same arithmetic, with one subsystem to this end emulating the arithmetic of the other subsystem.

2. Method according to Claim 1, in which the first algorithmic functional unit is an encoder, and the second algorithmic functional unit is a decoder.

3. Method according to one of the preceding claims, in which the first arithmetic is a floating point arithmetic (FloaP), and the second arithmetic is a fixed point arithmetic (FixP).

4. Method according to one of the preceding claims, in which the first subsystem is a data processing system, and in which the second subsystem is a communications terminal.

## Revendications

1. Procédé pour la mise en oeuvre d'une première unité fonctionnelle algorithmique (3) dans un premier sous-système (1) d'un système global (1 et 2), pour la mise en mémoire ou la transmission de données ou de signaux numériques (s) en tenant compte de la mise en oeuvre d'une deuxième unité fonctionnelle algorithmique (4) dans un deuxième sous-système (2) du système global, les deux unités fonctionnelles algorithmiques (3 resp. 4) présentant une sous-unité fonctionnelle algorithmique (7 resp. 8) commune, **caractérisé en ce que**
a) les processeurs du premier resp. du deuxième sous-système soutiennent par l'architecture électronique de ces processeurs une première resp. une deuxième arithmétique,
b) les unités fonctionnelles algorithmiques sont toutes deux mises en oeuvre dans l'arithmétique du processeur du sous-système dans lequel elles sont réalisées, et
c) les fonctions qui correspondent à la sous-unité fonctionnelle commune dans les deux sous-systèmes sont mises en oeuvre dans la même arithmétique, un sous-système émulant dans ce but l'arithmétique de l'autre sous-système.

2. Procédé selon la revendication 1, dans lequel la première unité fonctionnelle algorithmique est un codeur et la deuxième unité fonctionnelle algorithmique est un décodeur.

3. Procédé selon l'une des revendications précédentes, dans lequel la première arithmétique est une arithmétique à virgule flottante (FLoaP) et la deuxième arithmétique une arithmétique à virgule fixe (FixP).

4. Procédé selon l'une des revendications précédentes, dans lequel le premier sous-système est un système de traitement de données et le deuxième sous-système est un terminal de communication.
